# EUROPEAN PATENT APPLICATION

(11) **EP 4 834 839 A1**
(43) Date of publication of application: **04.11.2026**
(21) Application number: 24913281.2
(22) Date of filing: 13.09.2024
(51) Int. Cl.: C01B 32/372, C01B 32/318, C01B 32/33, C01B 33/035, H01M 4/36, H01M 4/587, H01M 4/38, H01M 4/62, H01M 10/052

(54) **SILICON-CARBON COMPOSITE FOR NEGATIVE ELECTRODE ACTIVE MATERIAL OF SECONDARY BATTERY, METHOD FOR PRODUCING SAME, AND NEGATIVE ELECTRODE ACTIVE MATERIAL COMPRISING SAME OF SECONDARY BATTERY**

(30) Priority: 27.12.2023 KR 20230192559
(71) Applicant: OCI Company Ltd., Seoul 04532 (KR)
(72) Inventor: JEONG, Eunhye, Seongnam-si Gyeonggi-do 13212 (KR); KANG, Seungyeon, Seongnam-si Gyeonggi-do 13212 (KR); NOH, Minho, Seongnam-si Gyeonggi-do 13212 (KR); LEE, Namjin, Seongnam-si Gyeonggi-do 13212 (KR); CHANG, Joonhyun, Seongnam-si Gyeonggi-do 13212 (KR); CHO, Yongjae, Seongnam-si Gyeonggi-do 13212 (KR); CHI, Eunok, Seongnam-si Gyeonggi-do 13212 (KR)
(74) Representative: Winter, Brandl - Partnerschaft mbB
(86) International application number: PCT/KR2024/014027
(87) International publication number: WO 2025/143440

(57) **Abstract**

**[Summary]**

The present invention relates to a silicon-carbon composite for negative electrode active material of secondary battery, a method for producing the silicon-carbon composite, and negative electrode active material comprising same of a secondary battery, more specifically to a silicon-carbon composite, for negative electrode active material of a secondary battery, allowing secondary battery properties to be improved when used as negative electrode active material due to the minimized change in volume of the silicon particles during secondary battery charging and discharging , and to a method for producing the silicon-carbon composite.

## Description

### [Technical Field]

The present invention relates to a silicon-carbon composite for secondary battery negative electrode active material, a method for manufacturing the same, and a secondary battery negative electrode active material including the same, and more specifically, to a silicon-carbon composite for secondary battery negative electrode active material which can improve characteristics of a secondary battery when applied as a negative electrode active material by minimizing a volume change of silicon particles during a charging and discharging process of the secondary battery, and a method for manufacturing the same.

### [Background Art]

The performance improvement of secondary batteries is based on components of a positive electrode material, a negative electrode active material, and an electrolyte.

Among the components, graphite-based materials, which are mainly used as the negative electrode active material, have been commercially used for their excellent electrochemical performance and low cost, but have a limitation in application to high-capacity secondary batteries because a theoretical capacity thereof is limited to 370 mAh/g.

In order to overcome the limitation, non-graphite-based negative electrode active materials such as silicon, tin, and germanium have emerged as alternative materials. Among them, silicon is attracting attention as a material to replace graphite because it has a theoretical capacity of 4000 to 4200 mAh/g, can store a very large amount of lithium per unit weight, and exhibits a high capacity of about 10 times or more compared to graphite. However, there is a limitation in that, compared to the high theoretical capacity, a large volume expansion of about 30 to 40% occurs during a charging and discharging process, causing problems such as destruction and pulverization of silicon particles and a decrease in electron conductivity with a carbon additive and a current collector, which ultimately leads to a loss of capacity and a reduction in cycle life of a secondary battery.

As a method for alleviating the volume expansion of silicon, a method for controlling characteristics of silicon particles and a method for manufacturing a silicon-carbon composite (Si-C composite) by mixing a carbon-based material have been devised, and improving the performance of a secondary battery by applying the composite as a negative electrode active material for a secondary battery has emerged as an important task.

### [Disclosure]

### [Technical Problem]

An object of the present invention is to provide a silicon-carbon composite as a negative electrode active material for a secondary battery, which can improve capacity, efficiency, capacity retention rate, and lifespan of the secondary battery when applied as the negative electrode active material of the secondary battery, and a method for manufacturing the same.

The objects of the present invention are not limited to the above-mentioned objects, and other objects and advantages of the present invention that are not mentioned can be understood by the following description, and will be more clearly understood by the embodiments of the present invention. In addition, it will be easily understood that the objects and advantages of the present disclosure can be realized by means indicated in the claims and combinations thereof.

### [Technical Solution]

In order to achieve the above object, according to a first aspect of the present invention,
there may be provided a silicon-carbon composite comprising:
a porous carbon matrix; and
silicon nanoparticles within the porous carbon matrix,
wherein the porous carbon matrix is formed to have first pores having an average pore size of 50 nm or less and second pores having an average pore size of more than 50 nm and 100 nm or less,
a pore volume of the first pores in the porous carbon matrix is 0.15 cm³/g to 0.4 cm³/g, and a pore volume of the second pores in the porous carbon matrix is 0.2 cm³/g to 0.8 cm³/g.

A total pore volume occupied by the first pores and the second pores in the porous carbon matrix may be 0.6 cm³/g to 1.2 cm³/g.

An average particle size of the silicon nanoparticles may be 1 nm to 100 nm.

An average particle size of the silicon-carbon composite particles may be 4 µm to 8 µm.

The porous carbon matrix may be formed of a mixture of carbon black and phenol resin.

A coating layer may be formed of a carbon-based coating material or a polymer coating material on a surface of the silicon-carbon composite.

According to a second aspect of the present invention, there may be provided a negative electrode active material for a secondary battery, comprising the silicon-carbon composite according to the first aspect of the present invention.

According to a third aspect of the present invention, there may be provided a secondary battery comprising a negative electrode active material for a secondary battery, the negative electrode active material comprising the silicon-carbon composite according to the first aspect of the present invention.

According to a fourth aspect of the present invention,
there may be provided a method for manufacturing a silicon-carbon composite, the method comprising:
(S1) preparing a first porous carbon matrix by mixing carbon black and phenol resin and then heat-treating the mixture at a temperature of 1000°C to 2000°C;
(S2) preparing a second porous carbon matrix by subjecting the first porous carbon matrix to steam activation at a temperature of 600°C to 1200°C;
(S3) placing the second porous carbon matrix in a reactor, supplying a silicon-source gas, and causing a reaction under conditions of atmospheric pressure and a temperature of 400°C to 550°C to perform chemical vapor deposition (CVD) or chemical vapor infiltration (CVI) of silicon nanoparticles in the porous carbon matrix; and
(S4) obtaining a silicon-carbon composite by precipitating the resultant product of (S3) as a solid.

The carbon black and the phenol resin in step (S1) may be mixed in a weight ratio of carbon black : phenol resin = 55 : 45.

Step (S3) may be performed under a carrier gas atmosphere, and the carrier gas may include at least one selected from nitrogen gas and argon gas.

The silicon-source gas may include at least one selected from the group consisting of monosilane (SiH₄) gas, disilane (Si₂H₆) gas, monochlorosilane (SiH₃Cl) gas, dichlorosilane (SiH₂Cl₂) gas, trichlorosilane (SiHCl₃) gas, and trimethylsilane (SiH(CH₃)₃) gas.

After step (S4), the method may further comprise: (S5) forming a coating layer with a carbon-based coating material or a polymer coating material on a surface of the obtained silicon-carbon composite.

Step (S5) may be performed by any one method among coating by chemical vapor deposition (CVD), coating by solution infiltration followed by solvent evaporation, coating by solution infiltration followed by solvent evaporation and annealing, coating by sol-gel, coating by a gas phase infiltration method, coating by a molten infiltration method, and coating by atomic deposition.

A thickness of the coating layer in step (S5) may be 1 nm to 20 nm.

### [Advantageous Effects]

The present invention can provide silicon particles adjusted to have a particle size under conditions capable of preventing cracking of silicon and minimizing volume expansion even during charging and discharging of a secondary battery.

The present invention can provide a carbon material having a pore volume distribution such that silicon can grow when manufactured into a silicon-carbon composite, while providing a void space capable of accommodating the volume expansion of silicon.

The present invention can provide a novel silicon-carbon composite formed of the silicon particles and the carbon material of the present invention.

Due to excellent characteristics of the silicon-carbon composite of the present invention, capacity, efficiency, capacity retention rate, and lifespan of a secondary battery manufactured by including the composite as a negative electrode active material can be improved.

In addition to the above-described effects, the effects of the present invention will be described together with the matters for implementing the invention below.

### [Description of Drawings]

FIG. 1 shows a flowchart of a method for manufacturing a silicon-carbon composite according to one embodiment of the present invention.
FIG. 2 shows a flowchart of a method for manufacturing a silicon-carbon composite according to another embodiment of the present invention.

### [Best Modes of the Invention]

The above-described objects, features, and advantages will be described in detail below with reference to the attached drawings, and thus those skilled in the art may easily implement the technical idea of the present invention. In describing the present invention, if it is determined that detailed descriptions of the known technology related to the present invention may unnecessarily obscure the gist of the present invention, the detailed description thereof will be omitted. Hereinafter, preferred embodiments according to the present invention will be described in detail with reference to the accompanying drawings. In the drawings, the same reference numerals are used to indicate the same or similar components.

In the specification, when terms such as "include/comprise," "have," "composed of," "dispose", "provided with", etc. are used for components, other parts may be added, unless "only" is used. When a component is expressed in singular, the plural is included unless otherwise explicitly stated.

In the present specification, particle size measurement is performed by a particle size analyzer (PSA) method, in which a particle size is calculated through a scattering angle distribution of light scattered while passing through a powder sample of a sample to be measured, and LS 13 320 Particle Size Analyzer (Beckman Coulter) was used as the measurement device, and an average particle size is based on D50 according to PSA analysis.

In the present invention, an average particle size of silicon in the silicon-carbon composite is measured through SEM (JSM-7100F) or TEM (JEM-2100F) analysis, sizes for silicon particles at at least 9 spots are measured, and then an average value is used.

In interpreting components in the present specification, even if not explicitly stated separately, they are interpreted as including a margin of error.

Hereinafter, the present invention will be described in more detail.

### Silicon-Carbon Composite

According to one aspect of the present disclosure,
there may be provided a silicon-carbon composite, including:
a porous carbon matrix; and silicon nanoparticles within the porous carbon matrix,
wherein the porous carbon matrix is formed to have first pores having an average pore size of 50 nm or less and second pores having an average pore size of more than 50 nm and 100 nm or less,
a pore volume of the first pores in the porous carbon matrix is 0.15 cm³/g to 0.4 cm³/g, and a pore volume of the second pores in the porous carbon matrix is 0.2 cm³/g to 0.8 cm³/g.

The first pores of the silicon-carbon composite of the present invention have an average pore size of 50 nm or less, and encompass micropores having an average pore size of 2 nm or less and mesopores having an average pore size of 2 nm to 50 nm.

In the present invention, since silicon nanoparticles are impregnated or deposited into first pores, which are micropores of the porous carbon matrix, to form a silicon-carbon composite, the first pores increase a surface area of the carbon matrix to allow a large amount of silicon nanoparticles having high energy density to be contained, and as a result, the composite can realize high-capacity characteristics of a secondary battery when used as a negative electrode active material for the secondary battery.

Therefore, a certain amount or more of the first pores should be secured to contribute to improving the capacity of the secondary battery when applied as the negative electrode active material for the secondary battery.

Meanwhile, when the first pores are excessively increased, a remaining surface where silicon is not filled is generated, so that a large amount of SEI (solid electrolyte interphase) is generated thereon, which may cause a problem in that initial efficiency of the secondary battery is lowered when applied as the negative electrode active material for the secondary battery.

From this point of view, it is preferable that a pore volume of the first pores is 0.15 to 0.4 cm³/g. In the present invention, the pore volume of the first pores is measured by a nitrogen adsorption method and analyzed by density-functional theory (DFT).

The second pores of the silicon-carbon composite of the present invention are macropores having an average pore size exceeding 50 nm, and in the present invention, pores having an average pore size of 50 nm to 100 nm are referred to as the second pores.

In the present invention, the second pores of the porous carbon matrix are relatively large pores, and when applied as a negative electrode active material of a secondary battery, can reduce diffusion resistance of an electrolyte of the secondary battery, facilitate movement of lithium ions, and simultaneously provide a space capable of accommodating mechanical damage of silicon nanoparticles during charging and discharging, thereby imparting improved stability to the negative electrode active material and the secondary battery.

Therefore, a certain amount or more of the second pores should be secured to provide a spatial margin capable of accommodating expansion of silicon during charging and discharging of a secondary battery when applied as a negative electrode active material of the secondary battery, and to contribute to improving lifespan of the secondary battery.

Meanwhile, when the second pores are excessively increased, silicon is filled into the second pores and a size of silicon particles increases, which may cause a decrease in the lifespan of the secondary battery. In addition, when a large amount of the second pores remain as pores without being filled with silicon, a particle density of the carbon matrix is lowered, so that during a rolling process in manufacturing an electrode plate of the secondary battery, composite particles may be crushed, resulting in a problem in that initial efficiency of the secondary battery is rapidly reduced.

From this point of view, it is preferable that a pore volume of the second pores is 0.2 to 0.8 cm³/g. In the present invention, the pore volume of the second pores is measured by a mercury porosimetry method.

According to one embodiment of the present invention, a total pore volume occupied by the first pores and the second pores in the porous carbon matrix is preferably 0.6 cm³/g to 1.2 cm³/g, which is to implement the above-described effects including appropriate impregnation of silicon particles by providing sufficient pores in the porous carbon matrix.

An average particle size of silicon particles included in the silicon-carbon composite of the present invention is preferably 1 nm to 100 nm. In order to manufacture a negative electrode active material having a high capacity retention rate of a secondary battery, a particle size of silicon should be reduced to suppress structural deformation of silicon particles during charging and discharging of the secondary battery. Therefore, when the average particle size of the silicon nanoparticles exceeds 100 nm, there may be a problem in that a surface of the silicon particles is broken during charging and discharging, resulting in a decrease in performance.

An average particle size of the silicon-carbon composite of the present invention may be 4 µm to 8 µm. When the average particle size of the silicon-carbon composite particles is less than 4 µm, a large amount of a solid electrolyte interphase layer (SEI layer) is formed on an electrode surface during charging and discharging of a secondary battery when applied as a negative electrode material of the secondary battery, which may cause a problem in that initial efficiency is reduced. On the other hand, when the average particle size of the silicon-carbon composite particles exceeds 8 µm, there may be a problem in that a reduction in lifespan due to contraction and expansion of the silicon-carbon composite during charging and discharging of a secondary battery when applied as a negative electrode material of the secondary battery is intensified.

According to one embodiment of the present invention, the porous carbon matrix may be formed of a mixture of carbon black and phenol resin. A method for forming the porous carbon matrix will be described in detail in a method for manufacturing a silicon-carbon composite to be described later.

According to one embodiment of the present invention, the silicon-carbon composite may further include a coating layer formed of a carbon-based coating material or a polymer coating material on a surface thereof. When the coating layer is formed as described above, silicon exposed outside the silicon-carbon composite can be more effectively protected, a strength of particles of the silicon-carbon composite can be improved, and electrical conductivity can be increased, thereby allowing properties required for the silicon-carbon composite to be adjusted. A thickness of the coating layer is not particularly limited, but may be, for example, 1 nm to 100 nm, for example 1 nm to 50 nm, or for example 1 nm to 20 nm.

According to one embodiment of the present invention, a coating material for forming the coating layer may include, for example, at least one selected from the group consisting of petroleum-based pitch, ethylene, acetylene, methane, ethane, an epoxy resin, polyphenol, polyaniline, polyvinyl alcohol, polyvinyl chloride, and other crosslinked polymers, but is not limited thereto.

As a method for forming a carbon-based coating layer among the coating materials, the carbon-based coating layer may be deposited by chemical vapor deposition (CVD) using a carbon source gas including at least one selected from the group consisting of methane gas, ethane gas, propane gas, butane gas, acetylene gas, and ethylene gas.

As a coating method for forming the coating layer, coating by chemical vapor deposition (CVD), coating by solution infiltration followed by solvent evaporation, coating by solution infiltration followed by solvent evaporation and annealing, coating by sol-gel, coating by a gas phase infiltration method, coating by a molten infiltration method, coating by atomic deposition, or the like may be applied, but the present invention is not necessarily limited thereto.

### Method for Manufacturing Silicon-Carbon Composite

The present invention provides a method capable of manufacturing a silicon-carbon composite, and the manufactured silicon-carbon composite can satisfy characteristics of the silicon-carbon composite of the present invention described above.

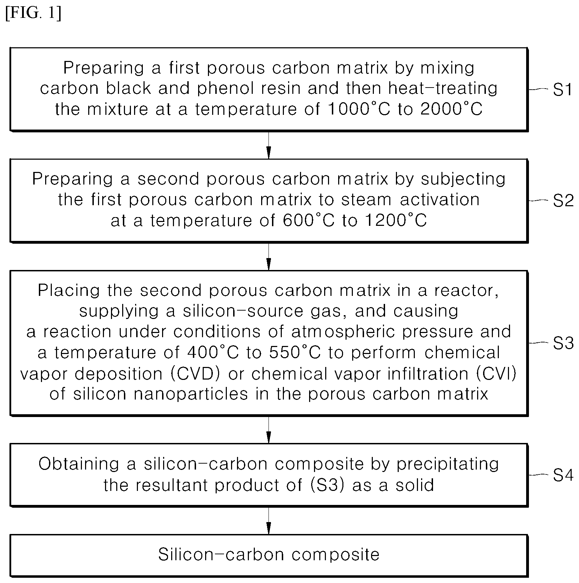

Referring to FIG. 1, according to one aspect of the present disclosure,
there may be provided a method for manufacturing a silicon-carbon composite, including:
(S1) preparing a first porous carbon matrix by mixing carbon black and phenol resin and then heat-treating the mixture at a temperature of 1000°C to 2000°C;
(S2) preparing a second porous carbon matrix by subjecting the first porous carbon matrix to steam activation at a temperature of 600°C to 1200°C;
(S3) placing the second porous carbon matrix in a reactor, supplying a silicon-source gas, and causing a reaction under conditions of atmospheric pressure and a temperature of 400°C to 550°C to perform chemical vapor deposition (CVD) or chemical vapor infiltration (CVI) of silicon nanoparticles in the porous carbon matrix; and
(S4) obtaining a silicon-carbon composite by precipitating the resultant product of (S3) as a solid.

The porous carbon matrix, which is an important feature of the present invention, may be obtained by preparing a first porous carbon matrix by heat-treating carbon black and phenol resin in step (S1), and preparing a second porous carbon matrix by steam activation in step (S2).

Specifically, in step (S1), when carbon black is mixed with a phenol resin, which is a thermosetting resin, and then heat-treated at a temperature of 1000°C to 2000°C, a first porous carbon matrix having a rigid carbon structure formed by charring can be obtained. Charring (or carbonization) is a chemical process of incomplete combustion of a solid when treated with high heat. Such charring removes hydrogen and oxygen from the solid by the action of heat so that the remaining product, char, is mainly composed of carbon. The charring step of (S1) may be performed under an inert gas such as nitrogen gas.

A heat treatment temperature in step (S1) may preferably be 1000°C to 1500°C. In this case, in order to obtain a pore distribution intended in the present invention, the carbon black and the phenol resin are preferably mixed at a weight ratio of carbon black : phenol resin = 55 : 45.

A pore volume of the first pores and a pore volume of the second pores of the porous carbon matrix may be adjusted according to a mixing ratio of carbon black and a binder (phenol resin). As an amount of the phenol resin serving as a binder decreases, carbon black particles are sphericalized and thus are difficult to be bound, so that a pore volume due to the second pores, which are relatively large pores, increases. However, when the amount of phenol resin is too large, small micropores generated from the phenol resin during steam activation increase, and thus an appropriate ratio needs to be selected.

In step (S2), the first porous carbon matrix is subjected to steam activation at a temperature of 600°C to 1200°C. Accordingly, carbon of the porous carbon matrix is activated to increase pores and a surface area, thereby allowing silicon nanoparticles to be impregnated or adsorbed.

The steam activation of step (S2) may be performed at 800°C to 1000°C, and the activation step of (S2) may be performed under an inert gas such as nitrogen gas.

In a chemical vapor deposition reaction or a chemical vapor infiltration reaction for depositing silicon nanoparticles in the porous carbon matrix in step (S3), a gas serving as a carrier for supplying a reaction gas into a reactor may be supplied. Accordingly, according to one embodiment of the present invention, step (S3) may be performed under a carrier gas atmosphere, and the carrier gas may include at least one selected from nitrogen gas and argon gas. When the carrier gas is supplied, it can be helpful in controlling an overall reaction rate and obtaining a uniform homogeneous reaction product.

According to one embodiment of the present invention, hydrogen (H₂) gas may be further introduced in step (S3) in order to suppress reactivity of Si radicals generated as Si-H bonds are cleaved during a homogeneous reaction, thereby obtaining a uniform Si-C composite. If hydrogen gas is not added, there may be a problem in that thermal decomposition products of the silicon gas may be concentrated mostly at a front side of the reactor, resulting in nonuniform Si distribution.

In order to satisfy characteristics of silicon particles in the silicon-carbon composite according to one embodiment of the present invention, particularly characteristics of crystallinity and grain size, ratios of a silicon-source gas, a carrier gas, and a hydrogen gas may be adjusted. For example, assuming that a total gas amount of the three gases is 1000 sccm, the silicon-source gas may be 1 to 20 sccm, the carrier gas may be 400 to 600 sccm, and the hydrogen gas may be 400 to 600 sccm, but is not necessarily limited thereto.

According to one embodiment of the present invention, the silicon-source gas may include at least one selected from the group consisting of monosilane (SiH₄) gas, disilane (Si₂H₆) gas, monochlorosilane (SiH₃Cl) gas, dichlorosilane (SiH₂Cl₂) gas, trichlorosilane (SiHCl₃) gas, and trimethylsilane (SiH(CH₃)₃) gas, but is not necessarily limited thereto.

According to one embodiment of the present invention, a temperature condition of step (S3) may be, for example, 400°C to 550°C, for example 450°C to 500°C, and may be appropriately adjusted within the above temperature range in consideration of characteristics of silicon particles in the silicon-carbon composite according to the present invention.

According to one embodiment of the present invention, in step (S4), in order to precipitate the resultant product of step (S3) as a solid, it may be cooled to a room temperature of 15°C to 25°C and deposited in a crucible.

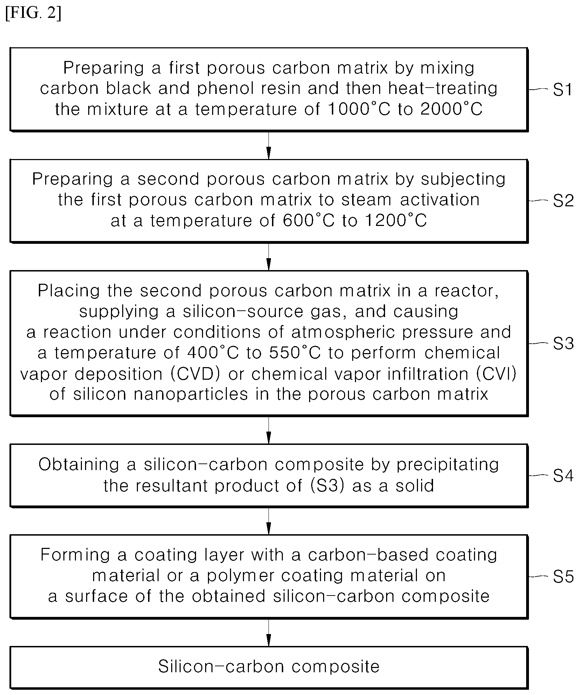

Referring to FIG. 2, according to one embodiment of the present invention, after step (S4), the method may further include: (S5) forming a coating layer with a carbon material for coating on a surface of the obtained silicon-carbon composite.

The carbon-based coating material for forming the coating layer may include, for example, at least one selected from the group consisting of petroleum-based pitch, ethylene, acetylene, methane, ethane, an epoxy resin, polyphenol, polyaniline, polyvinyl alcohol, polyvinyl chloride, and other crosslinked polymers, but is not limited thereto.

As a method for forming the carbon-based coating layer, deposition may be performed by chemical vapor deposition (CVD) using a carbon source gas including at least one selected from the group consisting of methane gas, ethane gas, propane gas, butane gas, acetylene gas, and ethylene gas.

The carbon-based coating material may include a conductive polymer. For example, the conductive polymer may include at least one selected from the group consisting of polyacrylonitrile (PAN), polyaniline, polypyrrole, polyacetylene, polyphenylene, polyphenylene sulfide, polythiophene, poly(fluorene), polypyrene, polyazulene, polynaphthalene, polycarbazole, polyindole, polyazepine, poly(3,4-ethylenedioxythiophene) (PEDOT), poly(p-phenylene sulfide) (PPS), and poly(p-phenylene vinylene) (PPV), but is not necessarily limited thereto.

As a coating method for forming the coating layer, coating by chemical vapor deposition (CVD), coating by solution infiltration followed by solvent evaporation, coating by solution infiltration followed by solvent evaporation and annealing, coating by sol-gel, coating by a gas phase infiltration method, coating by a molten infiltration method, coating by atomic deposition, or the like may be applied, but the present invention is not necessarily limited thereto.

According to one embodiment of the present invention, step (d) may be performed by any one method among coating by chemical vapor deposition (CVD), coating by solution infiltration followed by solvent evaporation, coating by solution infiltration followed by solvent evaporation and annealing, coating by sol-gel, coating by a gas phase infiltration method, coating by a molten infiltration method, and coating by atomic deposition, and for example, may be performed by coating by chemical vapor deposition (CVD), but is not limited thereto.

### [Mode for Invention]

Hereinafter, the present invention will be described in more detail by way of examples and experimental examples. However, the following examples and experimental examples are merely illustrative of the present invention, and the content of the present invention is not limited thereto.

### [Preparation Example 1 - Preparation of Porous Carbon Matrix]

### Method for preparing porous carbon matrix A

Carbon black and a binder (carbon black : phenol resin = 55 : 45) were mixed in isopropyl alcohol (IPA), and then dried by a spray drying method to form spherical powder particles. The spheroidized particles were carbonized at a temperature of about 1000°C to 1100°C, and then subjected to steam activation at a temperature of 950°C to prepare porous carbon matrix A.

### Method for preparing porous carbon matrices B to E

Porous carbon matrices B to E were respectively prepared in the same manner as in the method for preparing porous carbon matrix A, except that a mixing ratio of carbon black (CB) and phenol resin was changed, and the mixing ratios of carbon black (CB) and phenol resin and measured pore volumes are shown in Table 1 below.

### Experiment on Surface Characteristics of Porous Carbon Matrices A to E

For each of the prepared porous carbon matrices A to E, a pore volume of first pores was measured by a nitrogen adsorption method and analyzed by density-functional theory (DFT). In addition, a pore volume of second pores was measured by mercury porosimetry method, and a total pore volume was calculated by summing the pore volume of the first pores and the pore volume of the second pores.

**[Table 1]**

| | CB : phenol resin (by weight) | Pore volume of first pores [cm³/g] | Pore volume of second pores [cm³/g] | Total pore volume [cm³/g] |
|---|---|---|---|---|
| Carbon matrix A | 55 : 45 | 0.37 | 0.27 | 0.64 |
| Carbon matrix B | 60 : 40 | 0.39 | 0.05 | 0.44 |
| Carbon matrix C | 65 : 35 | 0.82 | 0.4 | 0.89 |
| Carbon matrix D | 70 : 30 | 0.1 | 0.54 | 0.64 |
| Carbon matrix E | 50 : 50 | 0.61 | 0.14 | 0.75 |

As can be seen from Table 1 above, a pore volume of first pores and a pore volume of second pores could be adjusted by adjusting a ratio of carbon black (CB) and a phenol resin, and thus, a total pore volume of a porous carbon matrix could also be adjusted.

### Method for Manufacturing Silicon-Carbon Composite

About 5 g of the porous structure was placed on a crucible in a reaction apparatus and heated to a temperature of 455°C. Into the reaction apparatus heated to 455°C, a mixed gas of monosilane gas and hydrogen gas (mixed at a ratio of monosilane gas : hydrogen gas = 50 sccm : 450 sccm) was injected and reacted under atmospheric pressure. After reacting for about 2 hours, the reaction product was cooled to room temperature to obtain about 10 g of a gray-black solid silicon-carbon composite deposited in the crucible.

A chemical vapor deposition reaction was performed at 455°C for 2 hours while flowing a mixed gas of acetylene gas and argon gas (acetylene gas : argon gas = C₂H₂ : Ar = 250 sccm : 250 sccm) over 2 g of the obtained silicon-carbon composite to form a carbon coating layer having a thickness of about 10 nm on a surface of the silicon-carbon composite, thereby manufacturing a final silicon-carbon composite.

### Experimental Example - Half-Cell Test

The manufactured silicon-carbon composite was prepared as a negative electrode active material. Separately, conductive carbon black (Super P) and a carbon nanotube conductive material (SWCNT) were mixed (Super P : SWCNT = 9 : 1, weight ratio) to prepare a conductive material. Separately, CMC (sodium salt of carboxymethyl cellulose) and SBR (styrene-butadiene rubber) were mixed (CMC : SBR = 3 : 7, weight ratio) to prepare a binder.The negative electrode active material, the conductive material, and the binder, each prepared above, were mixed with a Thinky-mixer (negative electrode active material : conductive material : binder = 8 : 1 : 1, weight ratio) to obtain a negative electrode slurry.

The negative electrode slurry was applied on a copper foil having a thickness of 18 µm and dried at 80°C for 1 hour. Then, the applied foil was heat-treated in a vacuum oven at 100°C for 12 hours, and then punched to 16 mmØ to prepare a negative electrode plate.

The prepared negative electrode plate was fabricated into a coin cell using Li metal as a counter electrode to confirm electrochemical characteristics. Charging and discharging conditions for initial 1 to 2 cycles (cycle formation) were charging CC/CV: 0.005V/0.005C, discharging CC 1.5V, and a rate of 0.1C; and from the 3rd cycle, the rate was 0.5C, and 20 cycles were performed to measure lifespan characteristics.

By performing charging and discharging for 20 cycles using a TOSCAT-3100 equipment, which is a half-cell device, initial discharge capacity (IDC, mAh/g), initial efficiency (ICE, %), and lifespan (%) were measured, and the results are shown in Table 2 below.

Here, the lifespan was expressed as a percentage by dividing a discharge capacity of an n-th cycle by a discharge capacity of a 3rd cycle, based on the capacity of the 3rd cycle performed at a rate of 0.5C.

In Table 2 below, Example 1 used the silicon-carbon composite manufactured from carbon matrix A as a negative electrode active material, and Comparative Examples 1 to 4 used the silicon-carbon composites respectively manufactured from carbon matrices B to E as negative electrode active materials.

**[Table 2]**

| | Example 1 | Comparative Example 1 | Comparative Example 2 | Comparative Example 3 | Comparative Example 4 |
|---|---|---|---|---|---|
| Initial discharge capacity [mAh/g] | 2116 | 2250 | 1814 | 1650 | 2092 |
| Initial efficiency (%) | 90.2 | 88.7 | 82.0 | 74.2 | 86.4 |
| Lifespan [%] @ 20cycle | 90 | 61 | 96 | 73 | 38 |

As can be seen from Table 2 above, it was found that, when the silicon-carbon composite of Example 1 manufactured using the porous carbon matrix specified in the present invention was used as a negative electrode active material, the initial discharge capacity, initial efficiency, and lifespan of the secondary battery were all improved compared to Comparative Examples 1 to 4 which did not satisfy the porous matrix specified in the present invention.

Although the embodiments of the present disclosure have been described in detail with reference to the accompanying drawings, the present disclosure is not necessarily limited to these embodiments, but may be modified and implemented in various ways without departing from the technical spirit of the present disclosure. Accordingly, the embodiments disclosed in the specification are not intended to limit but to illustrate the technical idea of the present disclosure, and the scope of the technical idea of the present disclosure is not limited by these embodiments. Therefore, it should be understood that the embodiments described above are illustrative in all respects and not restrictive. The scope of protection of the present disclosure should be interpreted by the claims, and all technical ideas within the equivalent scope should be construed as being included in the scope of rights of the present disclosure.

## Claims

1. A silicon-carbon composite comprising:
a porous carbon matrix; and
silicon nanoparticles within the porous carbon matrix,
wherein the porous carbon matrix is formed to have first pores having an average pore size of 50 nm or less and second pores having an average pore size of more than 50 nm and 100 nm or less,
a pore volume of the first pores in the porous carbon matrix is 0.15 cm³/g to 0.4 cm³/g, and a pore volume of the second pores in the porous carbon matrix is 0.2 cm³/g to 0.8 cm³/g.

2. The silicon-carbon composite of claim 1, wherein a total pore volume occupied by the first pores and the second pores in the porous carbon matrix is 0.6 cm³/g to 1.2 cm³/g.

3. The silicon-carbon composite of claim 1, wherein an average particle size of the silicon nanoparticles is 1 nm to 100 nm.

4. The silicon-carbon composite of claim 1, wherein an average particle size of the silicon-carbon composite particles is 4 µm to 8 µm.

5. The silicon-carbon composite of claim 1, wherein the porous carbon matrix is formed of a mixture of carbon black and phenol resin.

6. The silicon-carbon composite of claim 1, wherein a coating layer is formed of a carbon-based coating material or a polymer coating material on a surface of the silicon-carbon composite.

7. A negative electrode active material for a secondary battery, comprising the silicon-carbon composite according to any one of claims 1 to 6.

8. A secondary battery comprising a negative electrode active material for a secondary battery, the negative electrode active material comprising the silicon-carbon composite according to any one of claims 1 to 6.

9. A method for manufacturing the silicon-carbon composite according to any one of claims 1 to 6, the method comprising:
(S1) preparing a first porous carbon matrix by mixing carbon black and phenol resin and then heat-treating the mixture at a temperature of 1000°C to 2000°C;
(S2) preparing a second porous carbon matrix by subjecting the first porous carbon matrix to steam activation at a temperature of 600°C to 1200°C;
(S3) placing the second porous carbon matrix in a reactor, supplying a silicon-source gas, and causing a reaction under conditions of atmospheric pressure and a temperature of 400°C to 550°C to perform chemical vapor deposition (CVD) or chemical vapor infiltration (CVI) of silicon nanoparticles in the porous carbon matrix; and
(S4) obtaining a silicon-carbon composite by precipitating the resultant product of (S3) as a solid.

10. The method of claim 9, wherein the carbon black and the phenol resin in step (S1) are mixed in a weight ratio of carbon black : phenol resin = 55 : 45.

11. The method of claim 9, wherein Step (S3) is performed under a carrier gas atmosphere, and the carrier gas includes at least one selected from nitrogen gas and argon gas.

12. The method of claim 9, wherein the silicon-source gas includes at least one selected from the group consisting of monosilane (SiH₄) gas, disilane (Si₂H₆) gas, monochlorosilane (SiH₃Cl) gas, dichlorosilane (SiH₂Cl₂) gas, trichlorosilane (SiHCl₃) gas, and trimethylsilane (SiH(CH₃)₃) gas.

13. The method of claim 9, further comprising:
after step (S4),
(S5) forming a coating layer with a carbon-based coating material or a polymer coating material on a surface of the obtained silicon-carbon composite.

14. The method of claim 13, wherein Step (S5) is performed by any one method among coating by chemical vapor deposition (CVD), coating by solution infiltration followed by solvent evaporation, coating by solution infiltration followed by solvent evaporation and annealing, coating by sol-gel, coating by a gas phase infiltration method, coating by a molten infiltration method, and coating by atomic deposition.

15. The method of claim 13, wherein a thickness of the coating layer in step (S5) is 1 nm to 20 nm.
